(19) **Europäisches Patentamt / European Patent Office / Office européen des brevets**

(11) **EP 2 828 949 B1**

(12) **EUROPEAN PATENT SPECIFICATION**

(45) Date of publication and mention
of the grant of the patent:
**20.05.2020 Bulletin 2020/21**

(21) Application number: **13711633.1**

(22) Date of filing: **19.03.2013**

(51) Int Cl.:
*H02J 9/06* $^{(2006.01)}$  *H05B 41/295* $^{(2006.01)}$
*H05B 41/298* $^{(2006.01)}$

(86) International application number:
**PCT/EP2013/055654**

(87) International publication number:
**WO 2013/139773 (26.09.2013 Gazette 2013/39)**

(54) **LAMP UNIT POWER SUPPLY SYSTEM**

STROMVERSORGUNGSSYSTEM FÜR LAMPENEINHEIT

SYSTÈME D'ALIMENTATION ÉLECTRIQUE POUR MODULE DE LAMPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2012 GB 201204787**

(43) Date of publication of application:
**28.01.2015 Bulletin 2015/05**

(73) Proprietor: **Tridonic Uk Ltd
Chineham, Basingstoke RG24 8LB (GB)**

(72) Inventor: **WILSON, Ian
Sunderland SR3 3RH (GB)**

(74) Representative: **Banzer, Hans-Jörg et al
Kraus & Weisert
Patentanwälte PartGmbB
Thomas-Wimmer-Ring 15
80539 München (DE)**

(56) References cited:
**EP-A1- 1 202 428      EP-A1- 1 274 286
WO-A1-2010/040634    WO-A1-2010/043923**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 828 949 B1

**Description**

TECHNICAL FIELD

The present invention relates to a power supply system for supplying lamp unit power.

BACKGROUND TO THE INVENTION

Various arrangements for lighting systems are known which provide both conventional and emergency lighting. Such emergency lighting is intended to be activated when the conventional lighting is no longer operative because the direct mains supply to the conventional lighting is no longer available or malfunctions. Emergency lighting is typically powered by a battery or other energy storage device. Conventional lighting is controlled by an on/off switch by means of which a user (or control system) can control whether the lighting is illuminated or not. Generally, emergency lighting is intended to be automatically illuminated when the absence of mains power or the malfunction of mains power for the conventional lighting is detected in some way. Emergency lighting may be used to allow escape from buildings that would otherwise be in darkness due to the inoperativeness of the conventional lighting.
Emergency lighting and conventional lighting may share components. For example, the same lamp (such as a gas discharge lamp or light emitting diode) may be used for both conventional and emergency lighting. Other components may also be shared. Examples of such emergency lighting are disclosed in EP1274286 and WO2010/040634. A lighting system comprising emergency lighting and conventional lighting may be considered to have two operating modes. In a normal mode, when the direct mains supply is operating normally (within the normal voltage range), a switched mains input, controlled by an on/off switch, is monitored, and the lamp is illuminated or extinguished in dependence upon the switched mains input. In an emergency mode, when the mains supply is not available or is malfunctioning (is outside the normal voltage range), the lamp is illuminated automatically, irrespective of the status of the switched mains input, using power from a battery or other storage element.

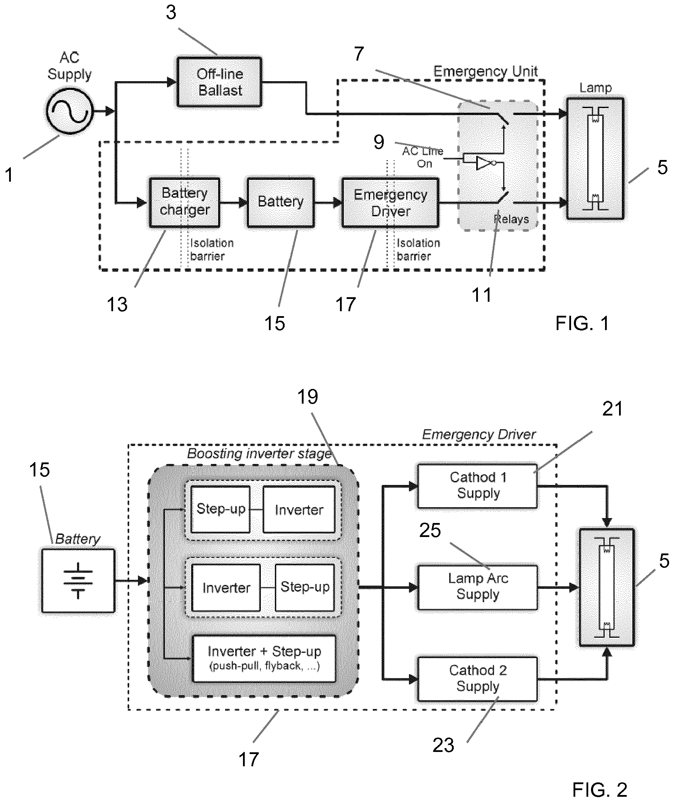

Figure 1 shows schematically the elements of a lighting arrangement that provides both a normal mode and an emergency lighting mode. A mains AC supply 1 provides power in the normal mode to a mains ballast 3 optimised for use with the mains supply 1. The mains ballast 3 drives the lamp 5 when a mains relay 7 is closed. A control circuit (not shown) monitors the mains AC supply 1. If the control circuit detects that the mains AC supply is interrupted, or if it is determined to be malfunctioning (operating outside an acceptable range of values), the control circuit may provide an appropriate signal to relay control line 9 to open the mains relay 7 and to close an emergency relay 11. The emergency relay 11 allows the lamp 5 to be driven in an emergency mode.

To provide the emergency mode, the emergency lighting arrangement includes, in addition to the mains relay 7, relay control line 9 and emergency relay 11, a battery charger 13, a battery 15 and an emergency driver 17.

When the mains AC supply 1 is operating normally (and the lamp 5 is powered by the mains ballast 3), the battery 15 is charged (continuously or when required) by the battery charger 13. The battery charger 13 provides galvanic isolation between the AC mains supply 1 and the battery 15. When the control circuit detects that the AC supply 1 is interrupted (or malfunctioning), the emergency relay 11 is closed (the mains relay 7 is opened), and the emergency driver 17 illuminates the lamp 5 using power from the battery 15. Emergency driver 17 provides galvanic isolation of the battery 15 from the lamp 5.

As will be known to those skilled in the art, gas discharge lamps, such as fluorescent lamps, require an arc voltage to be applied between the lamp electrodes by a lamp arc supply. For most gas discharge lamps the lamp cathodes are heated by a cathode supply in order to heat the cathode filaments to cause them to emit electrodes into the gas within the lamp tube by thermionic emission.

Known emergency lighting arrangements do not provide an effective way of controlling lamp power for optimum lamp operation. Known emergency lighting arrangements do not provide an effective way of controlling the battery discharge for optimum battery operation.

SUMMARY OF THE INVENTION

In one aspect, the present invention provides a power supply system for supplying a lamp unit including a plurality of circuits having different frequency responses, the system including a driver for receiving power from a battery as power supply and operable to provide the lamp power from the power supply, the battery being galvanically isolated from the lamp unit and from a mains supply of the power supply system, characterised in that the driver is operable to adjust the total power provided to the lamp unit from the power supply and to adjust the current drawn from the battery by controlling a duty cycle of a pulse width modulation and a frequency modulation of the provided lamp power.

The driver can vary the proportion of current drawn from the battery. The driver can also adjust the total power provided to the lamp unit from the power supply when a quantity or type of the lamp(s) in the lamp unit is changed or when the power supply is altered and optionally can adjust the power provided as the arc power and as the cathode power.

The lighting system may be an emergency lighting system.

The lamp unit may comprise one or more lamps, such as light emitting diodes (LED) or gas discharge lamps, e.g. fluorescent lamps.

Because the circuits have different.frequency responses the proportion of the power supply current in the respective circuits is different at different frequencies. The embodiment to be described allows a desired proportion of the available power to be provided as arc power and as cathode power by selecting an appropriate frequency at which the frequency responses are such that the respective proportions of power for the arc power and the cathode power exist. The battery current at the selected frequency may, however, not be at a desired level and, in the embodiment, the battery current may be reduced in order to adjust the total power provided to the lamp unit. The circuits may be multiple-order circuits.

The present invention also provides an emergency lighting arrangement including the power supply system as defined above, which may further include the power supply mentioned above.

The system allows the addition of another battery as a means of improving lamp power in emergency mode. PWM can be applied for regulating the total output power, adapting the emergency system to the extra battery. If the battery is changed, for example by adding additional cells (or replacing the battery with a different battery), or in any other way, this may alter the nominal current. In response to this, the switch duty cycle may be adjusted so that the current drawn from the battery is at the optimum level despite the changes to the characteristics of the battery.

The embodiment to be described illustrates how to implement a system able to supply the correct arc and cathode power for all lamp cases in the most optimised way. Further, the embodiment allows the possible addition of an extra battery for improving only the arc power instead of transferring the extra power with similar arc-cathode ratio to the load. Battery count reduction is also enabled by applying such regulation technique.

One possible implementation of the system of the embodiment for optimising the regulation of power levels delivered to the lamp arc and cathodes in emergency mode may be the following:

1. Enables the correct power supply levels for the lamp arc and cathodes in fluorescent lamp ballasts supplied from a battery set.

2. Enables the correct power supply levels for the lamp arc and cathodes in fluorescent lamp emergency unit in emergency mode of operation.

3. Provides a possibility of adjusting the lamp arc and cathode power other than frequency modulation without changing the circuit in a fluorescent lamp emergency unit.

4. In case of multi-lamp supply using the same emergency unit, optimises the power supplied to the fluorescent lamp arc and cathodes for each particular input voltage and load case (lamp type).

5. In case of adding a battery (or batteries) to the set of a fluorescent lamp emergency unit, enables the transfer the power available from that addition in emergency mode only to the arc, improving ballast lumens factor (BLF).

6. In case of reducing a battery (or batteries) from the battery set, of a fluorescent lamp emergency unit, enables the setting of the most optimised power level in the lamp arc and cathodes in emergency mode (in this case, often increasing power in the cathodes and reducing in the lamp).

7. Enables the adjustment of the output power levels (lamp arc and cathodes) of a fluorescent emergency unit in production through a calibration procedure.

8. The above features can be limited to the lamp power in case where a light emitting diode is used as lamp load (no cathode heating).

The embodiment provides power regulation/control in the lamp (e.g. fluorescent lamp arc and cathodes), independently of the lamp type and battery set voltage. As it may not be possible to set proper power levels for multi-lamp and multi-battery applying only FM due to filters and lamps characteristics, the use of PWM adds another degree of freedom, enabling the required regulation.

As some embodiments describe a fluorescent lamp driver it has to be stated such system is only one example described for better understanding and the invention may be used for other kinds of lamp drivers such as light emitting diodes as well. The arc power correlates to the lamp power which is the light generating power.

BRIEF DESCRIPTION OF THE DRAWINGS

For a better understanding of the present invention an embodiment will now be described by way of example, with reference to the accompanying drawings, in which:

Figure 1 shows schematically the elements of a lighting arrangement that provides both a normal mode and an emergency lighting mode;

Figure 2 shows schematically an emergency driver in accordance with an embodiment of the invention;

Figure 3 shows an emergency driver circuit connected to a lamp and a battery in accordance with an embodiment of the invention;

Figure 4 shows the rectangular alternating output voltage produced by the input part of the emergency driver circuit of Figure 3, the vertical axis showing the voltage and the horizontal axis showing time;

Figure 5 shows fluorescent lamp arc current response across frequency, the vertical axis showing current in amps and horizontal axis showing frequency in Hertz;

Figure 6 shows lamp cathode current response across frequency, the vertical axis showing current in amps and the horizontal axis showing frequency in Hertz;

Figure 7 shows fluorescent lamp arc and cathode current response across frequency, the vertical axis showing current in amps and the horizontal axis showing frequency in Hertz;

Figure 8 shows fluorescent lamp arc power response, cathode power response and the total power across frequency, the vertical axis showing power in watts and the horizontal axis showing frequency in Hertz;

Figure 9 shows the total power response across frequency, the vertical axis showing power in watts and the horizontal axis showing frequency in Hertz;

Figure 10 shows battery current frequency response for the lamp arc, cathode and total supply power, the vertical axis being current in amps and the horizontal axis being frequency in Hertz;

Figure 11 shows battery current due to cathode and arc power reflecting frequency response at a 100% duty cycle and a reduced duty cycle, the vertical axis being current in amps and the horizontal axis being frequency in Hertz; and

Figure 12 shows battery current due to cathode and arc power reflecting frequency response at a 100% duty cycle and a reduced duty cycle, the vertical axis being current in amps and the horizontal axis being frequency in Hertz.

In the drawings generally like elements are designated with the same reference sign.

DETAILED DESCRIPTION OF EMBODIMENT OF THE INVENTION

As briefly discussed above, the lighting arrangement shown in Figure 1 includes a control unit (not shown) which detects when the AC mains supply 1 is present and operating correctly - such as when the AC mains supply 1 presents a voltage higher than a certain threshold (187 volts in a 230 volt nominal supply, for example). When the AC mains supply 1 is present and operating correctly, the mains ballast 3 provides power to illuminate the lamp via closed relay 7. Power from the AC mains supply 1 is also provided to battery charger 13 to charge the battery 15 (or to keep the battery 15 fully charged). The battery 15 may comprise a plurality of cells. Another energy storage device may be used instead of the battery 15.

When the control unit detects that the AC mains supply 1 is interrupted or malfunctioning - such as when the mains AC supply 1 presents a voltage lower than a certain threshold (145 volts in a 230 volt nominal supply, for example) the control unit opens the mains relay 7, closes the emergency relay 11, and activates the emergency driver 17. Emergency driver 17 provides power to illuminate the lamp 5 from only the battery 15 via the closed emergency relay 11. Isolation is provided from the AC mains line 1 to the battery 15 for safety reasons. The lamp 5 may be a gas discharge lamp or a light emitting diode (LED).

An emergency driver 17 in accordance with an embodiment of the invention is shown in Figure 2. The emergency driver 17 may comprise a boosting converter stage 19, e.g. a push-pull converter with a step-up characteristic, whose input is connected directly to the battery 15. The boosting converter stage 19 may be also comprised by a combination of a push-pull converter followed by a step-up converter, e.g. a boost converter, or a combination of a step-up converter followed by a push-pull converter.

The emergency driver 17 may provide a first cathode supply 21 and a second cathode supply 23 to heat the cathode filaments in case where the lamp 5 is a fluorescent lamp and a lamp arc supply 25. In case of a light emitting diode as lamp 5 there may be only a lamp supply 25. The lamp supply 25 may be a single stage converter as e.g. a flyback converter which takes over the function of the boosting converter stage 19.

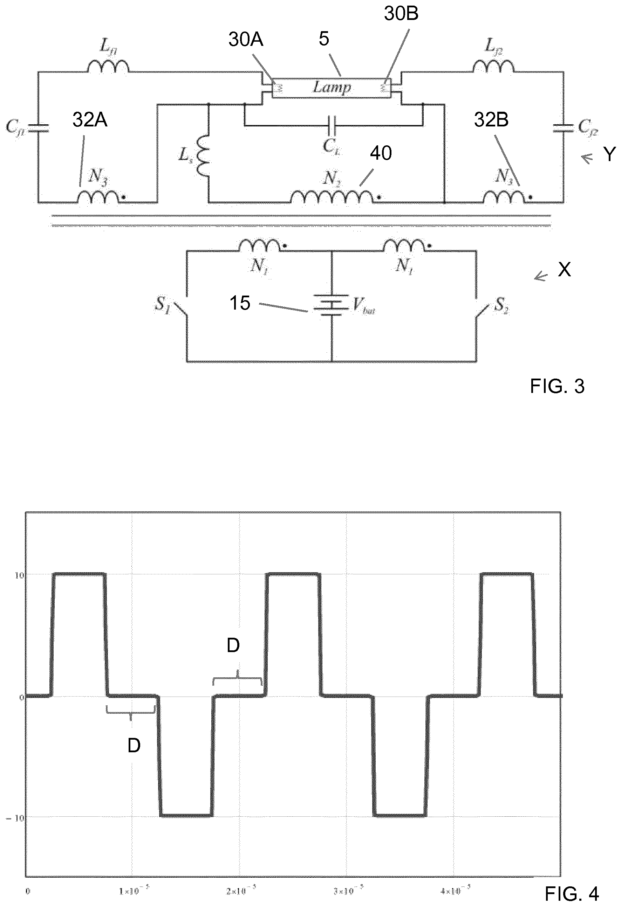

Figure 3 shows one example of the emergency driver 17 circuit connected to the lamp 5 and battery 15.

The emergency driver 17 comprises an input part X in the form of a bidirectional push-pull inverter. The input part X includes identical first and second portions connected in parallel across the battery 15. Each of the portions comprises a switch S1/S2 and a primary winding section N). By alternate operation of the switches S1/S2, the input part produces a rectangular alternating output voltage, as shown in Figure 4. The output may include a "dead time" D when both the switches $S_1$ and $S_2$ are closed, when the output is at zero volts. The duty cycle of the switches determines the duration of the dead time. The time for which each of the switches is closed and the frequency of operation (opening/closing) of the switches is controlled by a driver controller (not shown).

The input part X of the emergency driver 17 supplies an output part Y. The respective lamp cathodes 30A and 30B are supplied via the two identical secondary windings $N_3$ of the push-pull inverter of the output part Y with LC series identical filters connected to them. The first cathode 30A is connected to the first secondary winding 32A via series connected capacitor $C_{f1}$ and inductor $L_{f1}$. The second cathode 30B is connected to a second secondary winding 32B via a series connected second capacitor $C_{f2}$ and inductor $L_{f2}$.

The lamp arc supply is provided by another secondary winding 40 of the push-pull inverter through a L series C parallel filter, comprising inductor $L_S$ (connected in series between the secondary winding 40 and the first cathode 30A) and capacitor $C_L$ (connected in parallel across the first cathode 30A and the second cathode 30B).

A voltage is applied to the lamp filters with a magnitude proportional to the battery voltage and the turns ratio, as described by equation (1).

$$V_0 = \frac{N_S}{N_P} \cdot U_{Batt} \tag{1}$$

where $N_P$ and $N_S$ are the primary and secondary turns number and $U_{Batt}$ is the battery 17 voltage.

The primary turns number is the same for both arc and cathodes supply ($N_1$ in fig. 3). The secondary turns number is the same for both of the two cathodes ($N_3$ in fig. 3) and different for the arc supply ($N_2$ in fig. 3).

The rectangular waveform shown in Figure 4 is composed of the sum of its first and its odd harmonics, changing harmonics amplitudes according to its duty cycle. Such voltage is applied to the set filters and loads (arc and cathodes).

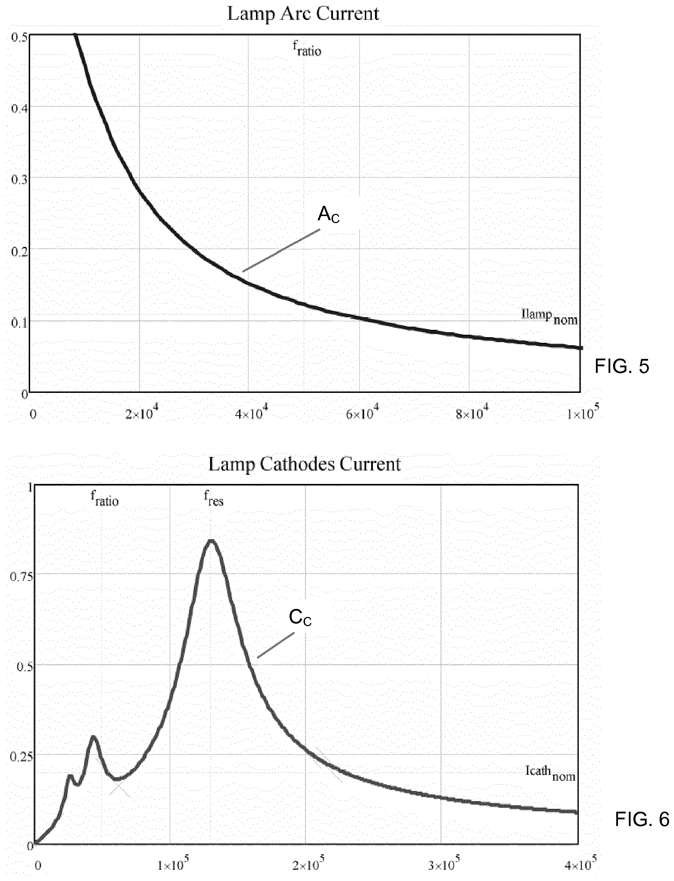

For a given lamp, the typical frequency response of the lamp arc current $A_C$ for a certain L series C parallel filter ($L_s$ and $C_L$), considering the lamp as an equivalent resistance $R_L$ (fixed), is shown in Figure 5. The plot is based on the response of equation (2).

$$I_{RL}(s) = \frac{\dfrac{1}{L \cdot C}}{s^2 + s \cdot \dfrac{R_L}{L} + \dfrac{1}{L \cdot C}} \tag{2}$$

Where L is the inductance
C is the capacitance
s is the frequency

For a given lamp, the typical frequency response of the cathode current $C_c$ for a certain LC series filter ($L_{f1}$, and $C_{f1}$, or $L_{f2}$ and $C_{f2}$) and a certain cathode resistance $R_{cath}$ supplied with a rectangular waveform is shown in Figure 6, whose plot is based on equation (3).

(3)

$$I_{Cath}(s) = \frac{\frac{V_{IN}}{L} \cdot s}{s^2 + s \cdot \frac{R_{Cath}}{L} + \frac{1}{L \cdot C}}$$

Where L is the inductance
C is the capacitance
s is the frequency
$V_{IN}$ is the voltage

The response of Figure 6 includes the effect of the rectangular waveform (Figure 4) harmonics. It can be seen that, due to the filter characteristic and amplitude of harmonics, the 3rd and the 5th harmonic are considerable in the range from 20 kHz up to 50 kHz.

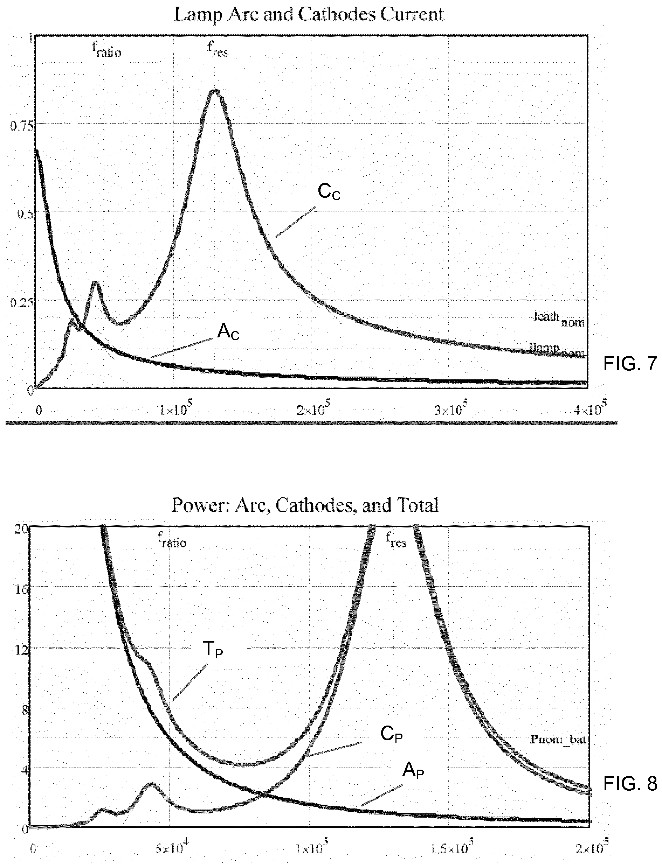

Figure 7 shows both responses from Figures 5 and 6 in the same plot for comparison.

As an objective is to regulate the power, Figure 8 illustrates the power response of the lamp arc $A_p$ and cathodes $C_p$, which are derived directly from the resistance and current from equations (2) and (3) (power = current$^2$ x resistance), and also shows the total power $T_p$.

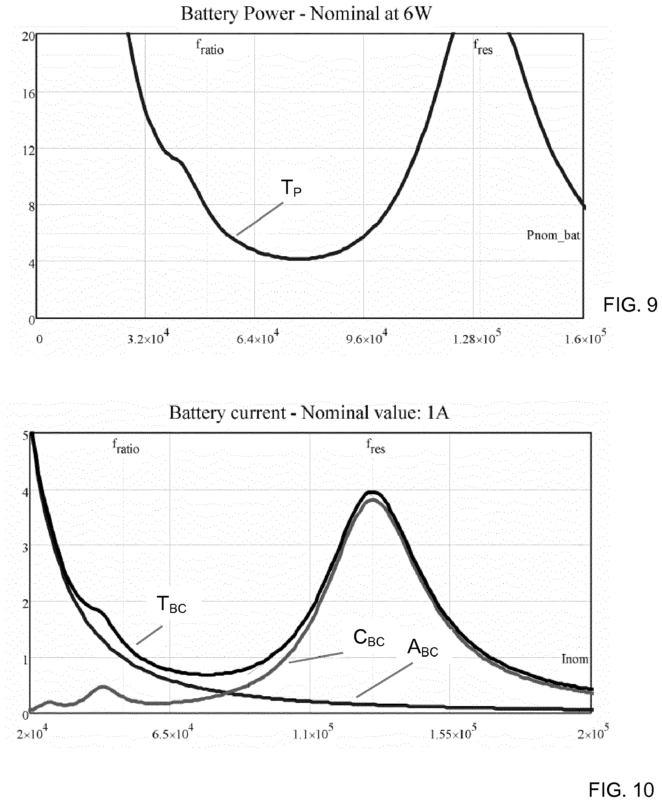

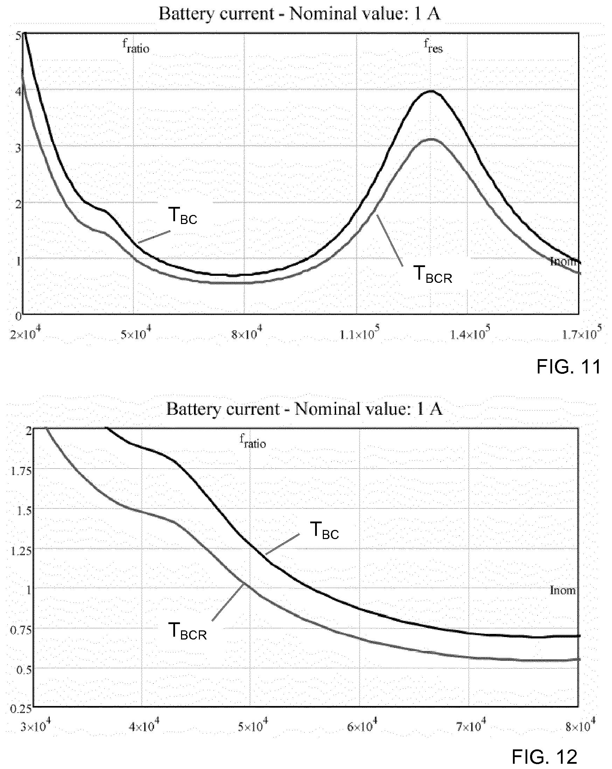

Figure 9 shows again the total power $T_p$ supplied from the battery 15 (neglecting converter efficiency) across a range of frequencies for the emergency converter. As the battery 15 is a DC voltage source, its average current is exactly equal to the power divided by its voltage. Thus, the current reflects the total output power plus losses in the converter in this embodiment. Figures 10 and 11 show the battery current for a 6.0V battery as an example, ignoring converter efficiency. Figure 10 shows the battery currents due to power in the cathodes $C_{BC}$ power in the arc $A_{BC}$ and the total power $T_{BC}$, the sum of the cathode and arc power. Those battery current responses are of interest for detailed analysis as an objective of the emergency converter of Figure 3 is to regulate the current in the battery for regulating power. The current $T_{BC}$ due to the total power is also shown in Figures 11 and 12.

As can be seen in the plots of Figure 10, a change in the converter switching frequency yields in a change in the power ratio between arc and cathodes. Setting the appropriate switching frequency ($f_{ratio}$) is a first step for achieving optimum power regulation.

At first, based on the current and power responses and particular characteristic of a certain lamp, the $f_{ratio}$ frequency (50kHz in this example) is chosen as it offers the required power ratio between lamp arc and cathodes. All plots (in Figures 6 to 12) present $f_{ratio}$ for illustrating this example. The switches S, and $S_2$ are therefore operated at the frequency $f_{ratio}$.

However, in this example, the total power is too high for the battery nominal current of 1A. The power for $f_{ratio}$ yields in approximately 1.25A in the battery (see Figures 10 to 12), which is 25% higher than the nominal.

As the ratio between arc and cathodes power is correct at $f_{ratio}$, the total power is regulated independently of that. In this example, that is realised by reducing the duty cycle of the converter. This is done by reducing the duty cycle of both of the switches S, and $S_2$ so that the dead time is increased. In this example, the duty cycle is reduced to 80% to provide the desired current of 1A.

Figures 11 and 12 show the battery current responses for 100% duty cycle ($T_{BC}$) - where the dead time is zero or negligible - and for a reduced (80%) value of duty cycle $T_{BCR}$. It can be observed that a reduction of duty cycle brings the battery current down and the 1A nominal battery discharge current is reached at the $f_{ratio}$ optimized switching frequency, resulting in the most optimized power supply for lamp arc and cathodes.

If the battery is changed, for example by adding additional cells (or replacing the battery with a different battery), or in any other way, this may alter the nominal current. In response to this, the switch duty cycle may be adjusted so that the current drawn from the battery is at the optimum level despite the changes to the characteristics of the battery. Further, if the characteristics of the battery are changed, this may alter the optimum proportion of power that is provided to the lamp (e.g. to the lamp arc and the lamp cathodes). If a cell is added, typically, the power applied to the lamp (e.g. arc and cathodes) should remain the same (increasing the power applied to the cathodes would just generate heat and increasing the power used for light would just lead to increased light output). The embodiment allows the proportion of power provided to the lamp cathodes and the lamp arc to be adjusted by selecting an appropriate frequency of the operation of the switches of the emergency converter. This allows to extend the time where power can provided by the additional cell to be applied to the lamp, and thereby resulting in increased time of illumination in emergency mode, rather than being used for higher light output. This could also allow additional power provided by the additional cell to be applied to the lamp arc, and thereby resulting in increased illumination, rather than being wasted by producing heat. It also allows to keep the current or power drawn from the battery constant independent of the number or type of battery and also independent of the type of lamp connected. In an example not forming part of the invention involving a light emitting diode as a lamp it is sufficient to control the power provided to the lamp as no cathode heating is necessary. In case of such LED lamp the current or power drawn from the battery can be adjusted to a fixed value irrespective of the lamp load or battery load.

If the nature of the lamp unit is changed, the embodiment allows the altered lamp unit to be driven in an optimal way. For example, if an additional fluorescent bulb or light emitting diode is added to the lamp unit, this could increase the total current drawn from the battery. Adjusting the duty cycle of the switches S1 and S2 allows the optimal nominal current drawn from the battery to be maintained despite the alternation of the lamp unit characteristics.

The system controls the current or power drawn from the battery set. It may be important that the current drawn from the battery (which is the battery discharge current) remains constant in order to extend the overall battery life time and to extend the time where the battery can supply the lamp in an emergency mode. As the battery voltage is almost constant for most of the discharge period it may be also possible to control the power drawn from the battery as this power control will lead to an almost constant current for most of the discharge period.

For simplifying the explanation, harmonics changes with duty cycle are not included in this example, although they may become significant in the design.

Although the embodiment uses a push-pull converter, several converter arrangements are able to provide a suitable higher rectangular voltage output, such as a simple cascade of a boost converter and an inverter. All drivers where pulse modulation, e.g. pulse width modulation, and frequency modulation can be applied may be used in accordance with the invention.

## Claims

1. A power supply system for supplying a lamp unit (5) including a plurality of circuits having different frequency responses, the system including a driver (17) for receiving power from a battery (15) as power supply and operable to provide the lamp power from the power supply, the battery (15) being galvanically isolated from the lamp unit (5) and from a mains supply of the power supply system,
   **characterized in that** the driver (17) is operable

   to adjust the total power provided to the lamp unit (5) from the power supply and
   to adjust the current drawn from the battery by controlling a duty cycle (D) of a pulse width modulation and a frequency modulation of the provided lamp power.

2. A power supply system of claim 1, **characterized in that** the driver (17) is operable to maintain a desired level of the total power provided to the lamp unit from the power supply when a quantity or type of the lamp(s) in the lamp unit is changed or when the power supply is altered.

3. An emergency lighting arrangement including the power supply system of claims 1 or 2.

4. The emergency lighting arrangement of claim 3, including the power supply.

## Patentansprüche

1. Stromversorgungssystem zum Versorgen einer Lampeneinheit (5), die eine Vielzahl von Schaltungen mit verschiedenen Frequenzgängen einschließt, wobei das System einen Treiber (17) zum Empfangen von Leistung von einer Batterie (15) als Stromversorgung und betriebsfähig zum Bereitstellen der Lampenleistung von der Stromversorgung einschließt, wobei die Batterie (15) galvanisch von der Lampeneinheit (5) und von einer Netzspannung des Stromversorgungssystems getrennt ist,
   **dadurch gekennzeichnet, dass** der Treiber (17) betriebsfähig ist
   zum Einstellen der Gesamtleistung, die der Lampeneinheit (5) von der Stromversorgung bereitgestellt wird und
   zum Einstellen des von der Batterie gezogenen Stroms durch Steuern eines Tastverhältnisses (D) einer Pulsbreitenmodulation und einer Frequenzmodulation der bereitgestellten Lampenleistung.

2. Stromversorgungssystem nach Anspruch 1, **dadurch gekennzeichnet, dass** der Treiber (17) betriebsfähig ist, um einen gewünschten Pegel der Gesamtleistung aufrechtzuerhalten, die der Lampeneinheit von der Stromversorgung bereitgestellt wird, wenn eine Menge oder ein Typ der Lampe(n) in der Lampeneinheit geändert bzw. gewechselt wird oder wenn die Stromversorgung geändert wird.

3. Notbeleuchtungsanordnung, einschließlich das Stromversorgungssystem nach einem der Ansprüche 1 oder 2.

4. Notbeleuchtungsanordnung nach Anspruch 3, einschließlich der Stromversorgung.

**Revendications**

1. Système d'alimentation électrique pour alimenter une unité de lampe (5) comprenant une pluralité de circuits ayant différentes réponses en fréquence, le système comprenant un circuit d'attaque (17) pour recevoir de la puissance depuis une batterie (15) en guise d'alimentation électrique et en mesure de fournir la puissance de lampe depuis l'alimentation électrique, la batterie (15) étant isolée de manière galvanique par rapport à l'unité de lampe (5) et par rapport à une alimentation réseau du système d'alimentation électrique,
**caractérisé en ce que** le circuit d'attaque (17) est en mesure
de régler la puissance totale fournie à l'unité de lampe (5) depuis l'alimentation électrique et
de régler le courant tiré de la batterie en commandant un cycle de service (D) d'une modulation de largeur d'impulsion et d'une modulation de fréquence de la puissance de lampe fournie.

2. Système d'alimentation électrique selon la revendication 1, **caractérisé en ce que** le circuit d'attaque (17) est en mesure de maintenir un niveau souhaité de la puissance totale fournie à l'unité de lampe depuis l'alimentation électrique lorsqu'une quantité ou un type de la ou des lampe(s) dans l'unité de lampe est changé ou lorsque l'alimentation électrique est modifiée.

3. Agencement d'éclairage d'urgence comprenant le système d'alimentation électrique selon les revendications 1 ou 2.

4. Agencement d'éclairage d'urgence selon la revendication 3, comprenant l'alimentation électrique.

FIG. 1

FIG. 2

FIG. 3

FIG. 4

EP 2 828 949 B1

## Lamp Arc Current

FIG. 5

## Lamp Cathodes Current

FIG. 6

11

## Lamp Arc and Cathodes Current

FIG. 7

## Power: Arc, Cathodes, and Total

FIG. 8

Battery Power - Nominal at 6W

FIG. 9

Battery current - Nominal value: 1A

FIG. 10

Battery current - Nominal value: 1 A

FIG. 11

Battery current - Nominal value: 1 A

FIG. 12

**EP 2 828 949 B1**

**REFERENCES CITED IN THE DESCRIPTION**

**Patent documents cited in the description**

- EP 1274286 A
- WO 2010040634 A